# EUROPÄISCHE PATENTSCHRIFT

(11) **EP 1 486 693 B1**
(45) Veröffentlichungstag und Bekanntmachung des Hinweises auf die Patenterteilung: **30.08.2006**
(21) Anmeldenummer: 03101703.1
(22) Anmeldetag: 11.06.2003
(51) Int. Cl.: F16D 25/12

(54) **Kühl- und Schmiersystem**
Cooling and lubrication system
Système de lubrification et refroidissement

(43) Veröffentlichungstag der Anmeldung: 15.12.2004
(73) Patentinhaber: Ford Global Technologies, LLC, A subsidary of Ford Motor Company, Dearborn, MI 48126 (US)
(72) Erfinder: Kirchhoffer, Johann, 50737, Köln (DE)
(74) Vertreter: Drömer, Hans-Carsten

(56) Entgegenhaltungen:
- DE-A- 10 020 187
- US-A- 4 642 604
- US-A- 5 769 182

## Beschreibung

Die Erfindung bezieht sich auf ein Kühl- und Schmiersystem für eine Kupplung für ein Übertragungssystem, insb. für eine Kupplung und das Getriebe eines vorzugsweise automatisierten Doppelkupplungsgetriebes, das zur Bereitstellung von Druck und für die Kühlung und Schmierung der Kupplung und des Getriebes zwei unabhängige hydraulische Kreisläufe umfaßt, wobei der erste hydraulische Kreislauf zur Ansteuerung der Kupplung und parallel dazu zur Schmierung und Kühlung des Getriebes und der Kupplung ausgebildet ist, sowie auch zur Schmierung und Kühlung des übrigen Übertragungssystems, und wobei der zweite hydraulische Kreislauf unabhängig vom ersten hydraulischen Kreislauf ausgebildet ist und im wesentlichen zur Kühlung des Ölsumpfes dient.

Aus dem Stand der Technik sind verschiedene Kühl- und Schmiersysteme für eine Kupplung für ein Übertragungssystem, insb. für eine Kupplung und das Getriebe eines vorzugsweise automatisierten Doppelkupplungsgetriebes, bekannt. Es besteht dabei bei den bekannten Systemen mit Doppelkupplungen zumeist das Problem, daß bei diesen Systemen das erhitzte Kühlmittel nicht dem Kühler des Kühl- und Schmiersystems zugeführt wird, sondern das erhitzte Kühlmittel gelangt direkt in den Ölsumpf. Bei den bekannten Systemen ist dabei die Steuerung und z.B. eine in dem Kühl- und Schmiersystem angeordnete Pumpe mit der Steuerung dafür verantwortlich, die Wärme bzw. Hitze aus dem Ölsumpf heraus zu der Kühleinrichtung zu transportieren. Dies kann zu einem zeitweiligen Ansteigen der Ölsumpf-Temperatur und zu einer lokalen Überhitzung des Getriebes und einen zu hohen Pegelstand führen, wodurch die Lebensdauer und die Zuverlässigkeit der Übertragungseinrichtung beeinträchtigt wird. Es ist außerdem aus Gründen der Effektivität und Wirtschaftlichkeit erforderlich, daß die Kühlfunktion in Abhängigkeit der der Kupplung zugeführten Eingangsenergie gemessen wird. Bei den herkömmlichen automatischen Übertragungseinrichtungen diente der Drehmomentenwandler gewöhnlich im unbelasteten Zustand als Drossel, wobei allerdings ein Kühleffekt durch Konvektion auftrat, was aber z.B. bei einem Doppelkupplungsgetriebe nicht der Fall ist. Der schlimmste Fall ist dabei eine Funktion unter Anhänger-Zugbelastung, bei der der Drehmomentenwandler die meiste Zeit im nicht geschlossenen Zustand arbeitet.

Bezüglich der bekannten Kühl- und Schmiersysteme sei zunächst auf die DE 100 20 187 A1 verwiesen. In dieser Druckschrift ist eine hydraulische Schaltung offenbart, insbesondere für ein automatisiertes Doppelkupplungsgetriebe für Kraftfahrzeuge, das ein Vorlegegetriebe mit zwei parallelen Kraftübertragungszweigen und zwei Kupplungen aufweist, mit einem Hochdruckkreis mit wenigstens einem Aktuator für das Vorlegegetriebe und/oder die Kupplungen, einem Niederdruckkreis zur Schmierung und/oder Kühlung von Bauteilen des Doppelkupplungsgetriebes und einer ersten Verstellpumpe zur variablen Bereitstellung des Hochdruckes für den Hochdruckkreis. Dabei weist der Niederdruckkreis eine Mehrzahl von zweiten Pumpen auf, die parallel an die erste Verstellpumpe angeschlossen sind. Die zweiten Pumpen können bei einer Ausführungsform als Strahlpumpen ausgebildet sein, die triebstromseitig an den Ausgang der ersten Verstellpumpe angeschlossen sind. Es weist dabei bei einer Ausführungsform der Niederdruckkreis wenigstens eine Strahlpumpe auf, die triebstromseitig an den Ausgang der ersten Verstellpumpe angeschlossen ist und deren Ausgangsvolumenstrom zur Kühlung und/oder Schmierung verwendet wird. Weiterhin kann wenigstens eine der Strahlpumpen triebstromseitig über ein Schaltventil an den Ausgang der ersten Verstellpumpe angeschlossen sein. Dabei kann die Strahlpumpe saugstromseitig über das Schaltventil an einen Ölsumpf angeschlossen sein.

Gemäß einer bevorzugten Ausführungsform dieser hydraulischen Schaltung ist wenigstens eine der Strahlpumpen ausgangsseitig mit einem Kühler verbunden, wobei der Ausgang des Kühlers mit der Saugstromseite einer weiteren Strahlpumpe verbindbar sein kann. Weiterhin weist bei einer dargestellten Ausführungsform der Niederdruckkreis vier Pumpen auf, von denen jeweils eine den zwei Kupplungen, eine dem Getriebe und eine einem Ölkühler zugeordnet ist. Der Hochdruckreis für die zwei Kupplungen weist bei einer Ausführungsform jeweils einen Aktuator und ein proportionales Wegeventil auf, wobei diese jeweils eine Ruhestellung besitzen, in der die zugeordnete Kupplung geöffnet und in der ein Steuerausgang für eine Nebenfunktion gesperrt ist, sowie eine weitere Stellung, in der die zugeordnete Kupplung geschlossen ist und in der der Steuerausgang für die Nebenfunktion gesperrt ist. Es ist dabei vorgesehen, daß die Nebenfunktion z.B. die Kühlung der dem proportionalen Wegeventil zugeordneten Kupplung ist.

Mit der in der DE 100 20 187 A1 beschriebenen Anordnung soll insgesamt eine gegenüber bekannten Ausführungen verbesserte hydraulische Schaltung für ein automatisiertes Doppelkupplungsgetriebe für Kraftfahrzeuge erzielt werden, wobei durch das Vorsehen einer Ansteuerung einer Nebenfunktion es möglich ist, funktional mit der Kupplung eines Doppelkupplungsgetriebes verbundene Aufgaben wie hydraulische Steuerung der Kupplungskühlung sowie z.B. auch die Auswahl, die Sperrung und die Freischaltung von Steilantrieben, ebenfalls mit zu steuern.

Die DE 100 20 187 A1 beschreibt also eine hydraulische Schaltung mit einem Hochdruck- und mit einem Niederdruckkreislauf. Es besteht dabei der Niederdruckkreislauf im wesentlichen aus Schaltventilen und Strahlpumpen. Diese Strahlpumpen können keinen Druck aufbauen und fördern Öl in Abhängigkeit von der Motordrehzahl. Eine eigentliche Durchflußkontrolle über die Motordrehzahl ist in diesem Falle nicht möglich. Der Niederdruckkreislauf wird hier für die Kühlung und die dahintergeschaltete Getriebe- und Kupplungsschmierung verwendet. Dabei ist der Kühlkreislauf und der Schmierungskreislauf in Serie geschaltet und mit jeweiligen Strahlpumpen versehen, um den Volumenstrom zu unterstützen. Über die proportionalen Wegeventile, die für das Öffnen und Schließen der Kupplungen verantwortlich sind, kann wahlweise der Hochdruck- oder der Niederkreislauf in den Kühlungs- bzw. Schmierungskreislauf zugeschaltet werden. Nachteilig ist bei der hier beschriebenen hydraulischen Schaltung insbesondere, daß zwar zwei getrennte Kreisläufe für die Kühlungs- un d Kupplungsansteuerung vorhanden sind, es hat jedoch diese hydraulische Schaltung nicht die Flexibilität, unabhängig von der Motordrehzahl und der Getriebeschmierung die Sumpftemperatur zu regulieren. Diese Schaltung weist insbesondere nicht einen Kreislauf nur für die Kühlung auf, es wird vielmehr das Kühlöl direkt in den Schmierkreislauf geführt. Es ist dabei insb. auch nachteilig, daß in diesem Fall vier Strahlpumpen benötigt werden, um das gekühlte Öl zu den Schmierstellen zu fördern und ständig gekühlt werden muß, was zu größeren Verlusten und höherem Verbrauch führt.

Es ist ferner aus der US-A- 4 922 765 ein Schmier- und Kühlsystem bekannt für eine Übertragungsanordnung die auf Eingangs- und Ausgangswellen getragen wird, wobei ein Kettenantrieb diese Wellen drehbar verbindet. Die Kette und die Antriebselemente auf den Wellen sind mit einem Gehäuse zur Isolierung der Anordnung versehen, wobei ein Ölbad an dem Boden dieses Gehäuses der Übertragungsanordnung gesammelt wird, das zur Schmierung der Kette oder anderer Übertragungselemente dient. Eine Ölpumpe verteilt Öl von einem Reservoir zu verschiedenen Bereichen der Anordnung, um so auf spezielle Weise innerhalb der Übertragungsanordnung geschmiert zu werden. Dabei wird durch mit der Ölpumpe in Wirkverbindung stehende Fördermittel der Pegel des Ölbades der Übertragungsanordnung reguliert. Das System kann zusätzliche Elemente umfassen, wie einen Ölfilter, einen externen Kühler, ein Rückflußventil zur Begrenzung des Druckes von der Ölpumpe, sowie verschiedene Kombinationen dieser Elemente. Von den verschiedenen Punkten der Schmierung innerhalb des Gehäuses gelangt das Öl zurück in das Gehäuse. Der Ölpegel innerhalb des Übertragungsgehäuses wird in der Weise reguliert, daß einerseits dieser Pegel möglichst niedrig gehalten wird und andererseits ausreichend viel Öl zur Schmierung der Kette bereitsteht. Es sind dabei im Falle des Vorsehens eines externen Kühlers Mittel zum Anschließen der Pumpe an den externen Kühler vorgesehen sowie Mittel zum Anschließen des Kühlers an das Reservoir, um ein Zurückfließen des Öles von der Pumpe zu ermöglichen. Der Kühler ist dabei also in einem eigenen Kühlkreislauf eingebunden. Mit dieser Anordnung soll insbesondere die bei anderen Systemen durch das Vorsehen einer großen Menge von Schmiermittel auftretende Erhöhung der Temperatur des Schmiermittels vermieden werden, wobei trotzdem eine verstärkte Schmierung des Übertragungssystems stattfinden soll.

Das hier beschriebene Schmier- und Kühlsystem für eine Übertragungsanordnung umfaßt also einen unabhängigen Kühlkreislauf, eingebunden in diesem Falle in einem 4x4 Verteilergetriebe. Das gekühlte Öl wird dabei in das in dem Übertragungsgehäuse befindliche Ölreservoir gepumpt, die Schmierung der Kette ist dabei parallel zu dem Kühlkreislauf angeordnet. Das System ist dabei als Niedrigdrucksystem ausgeführt, wobei keine elektronische oder bzw. elektrohydraulische Ansteuerung vorgesehen ist. Das hier beschriebene Schmierund Kühlsystem hat also an sich den Vorteil eines unabhängig von den Schmierkreisläufen angeordneten Kühlkreislaufes, nachteilig ist jedoch auch hier insbesondere, daß dieses Schmier- und Kühlsystem ebenfalls nicht die Flexibilität besitzt, unabhängig von den Schmierkreisläufen die Sumpftemperatur zu regulieren.

Schließlich ist aus der WO 95/10729 eine Schmiermittelzuführungssicherheitsanordnung für eine Maschine bekannt, umfassend ein Reservoir für das Schmieröl, einen Hydraulikmotor zum Antrieb einer oder mehrerer Förderpumpen, über die das Schmieröl von dem Reservoir zu verschiedenen Punkten in der Maschine geführt wird, eine erste Pumpe zur Zuführung von Schmieröl von dem Reservoir zum Antrieb des hydraulischen Motors unter normalen Funktionsbedingungen und eine zweite Pumpe zur Zuführung von Schmieröl von dem Reservoir zum Antrieb des hydraulischen Motors für den Fall des Ausfalls der ersten Pumpe. Dabei ist vorgesehen, daß die zweite Pumpe kontinuierlich von der Maschine angetrieben wird und daß die zweite Pumpe unmittelbar nach einem Druckabfall in der Ölzuführung durch die erste Pumpe automatisch durch eine Ventileinrichtung zum Antrieb des Hydraulikmotors in Eingriff gebracht wird. Es wird dabei bei einer Ausführungsform die kontinuierlich angetriebene zweite Pumpe über die Ventileinrichtung unter normalen Funktionsbedingungen mit einer Niedrigdruckleitung verbunden, um das Öl zu dem Reservoir zurückzuführen. Dabei ist vorgesehen, daß die Niedrigdruckleitung einen Niedrigdruck-Ölfilter und einen Niedrigdruck-Kühler umfaßt. Weiterhin ist vorgesehen, daß die Ventileinrichtung mechanisch in eine Ausfall-Sicherungsposition beaufschlagt wird, in der die zweite Pumpe in der Abwesenheit von Druck in der Ölzuführung durch die erste Pumpe mit dem Hydraulikmotor verbunden wird. Das Schmieröl- Reservoir ist dabei bevorzugt über eine Überlaufschwelle in einen ersten und einen zweiten Bereich unterteilt, wobei überlaufendes Öl über diese Überlaufschwelle von dem ersten in den zweiten Bereich fließt. Es pumpen dabei die ersten und zweiten Pumpen das Öl aus dem zweiten Bereich des Schmieröl- Reservoirs, während die Förderpumpen das Öl aus dem ersten Bereich des Schmieröl- Reservoirs pumpen. Es führt dabei die Niedrigdruckleitung zu dem ersten Bereich des Schmieröl- Reservoirs. Durch diese Ausbildung wird erreicht, daß das gereinigte und gekühlte Schmieröl, das zur Schmierung der Maschine verwendet wird, nicht mit dem Öl für den Antrieb des Hydraulikmotors vermischt wird.

Durch diese Schmiermittelzuführungssicherheitsanordnung für eine Maschine soll in gegenüber den bekannten Anordnungen verbesserter Weise sichergestellt werden, daß eine Schmierung der Maschine auch dann erfolgt, wenn eine Pumpe oder ein Pumpensystem ausfällt oder es zu einer Unterbrechung der Energiezufuhr z.B. durch einen Stromausfall kommt. Die beschriebene Sicherheitsanordnung soll insbesondere dann vorteilhaft sein, wenn große Teile einer Maschine mit einer großen rotierenden Masse oder solche Teile einer Maschine, die vor dem Anhalten dieser entleert werden müssen, eine Auslaufzeit von 20 Minuten oder mehr erfordern. Wenn die zweite Pumpe dabei kontinuierlich während der Bewegung der Maschine z.B. über einen Riemenantrieb angetrieben wird, wird diese bereits in Funktionsstellung sein, wenn sie benötigt wird, um Hochdrucköl zu dem Hydraulikmotor zu führen. Wenn die zweite Pumpe kontinuierlich angetrieben wird, wird diese in gewisser Weise kontinuierlich getestet, so daß eine auftretende Fehlfunktion dieser Pumpe sofort entdeckt wird.

Die hier beschriebene Sicherheitsanordnung beschreibt also ebenfalls einen eigenen Pu mpen-Kühlkreislauf. Es ist dabei die Ventileinrichtung als Schaltventil an der ersten Pumpe angeschlossen. Wenn diese erste Pumpe ausfällt, fällt die Ventileinrichtung in die Ruhestellung zurück und schaltet die zweite Pumpe an den Hydraulikmotor, die Kühlung selbst fällt dann komplett aus. Dieses System ist rein hydraulisch gesteuert und stellt eine Sicherheitseinrichtung für den hydraulischen Motor dar, der wiederum die Förderpumpen für die Schmierung der einzelnen Teile der Maschine antreibt. Auch diese Anordnung hat also den Vorteil eines eigenen unabhängigen Pumpen- Kühlkreislaufes, nachteilig ist jedoch auch hier wiederum, daß auch dieses Kühl- und Schmiersystem ebenfalls nicht die Flexibilität besitzt, unabhängig von den Schmierkreisläufen die Sumpftemperatur zu regulieren.

Ausgehend von diesen bekannten Kühl- und Schmiersystemen für eine Kupplung für ein Übertragungssystem, insb. für eine Kupplung und das Getriebe eines vorzugsweise automatisierten Doppelkupplungsgetriebes, liegt der Erfindung die Aufgabe zugrunde, die bekannten Kühl- und Schmiersysteme unter Beibehaltung der bisherigen Vorteile in der Weise zu verbessern bzw. weiterzuentwickeln, daß die Nachteile der zuvor diskutierten Lösungen vermieden werden, wobei es insb. möglich sein soll, die Sumpftemperatur bei dem gewünschten Kühl- und Schmiersystem unabhängig von den Schmierkreisläufen zu regulieren. Die bekannten Systeme sollen dabei insbesondere auch hinsichtlich der Lebensdauer und der Zuverlässigkeit verbessert werden, weiterhin soll die gewünschte Anordnung einfach und kostengünstig herstellbar sein. Des Weiteren soll durch ein gezieltes Ansteuern des Kühlkreislaufes der Gesamtgetriebewirkungsgrad verbessert werden.

Diese Aufgabe wird erfindungsgemäß dadurch gelöst, daß der zweite hydraulische Kreislauf als geschlossener Regelkreis zur vom ersten hydraulischen Kreislauf unabhängigen Regelung der Sumpftemperatur in Abhängigkeit der Durchflußmenge zum Kühler des Kühl- und Schmiersystems ausgebildet ist. Auf diese Weise wird erstmalig mit einfachen Mitteln die Möglichkeit geschaffen, ein Kühl- und Schmiersystem hinsichtlich seiner Flexibilität dadurch erheblich zu verbessern, daß die Sumpftemperatur dieses Kühl- und Schmiersystems unabhängig von den Schmierkreisläufen reguliert wird. Durch die unabhängige Regelung der Sumpftemperatur des Kühl- und Schmiersystems wird insbesondere vermieden, daß es wie bei vielen bekannten Systemen durch den Transport der Wärme bzw. Hitze aus dem Ölsumpf heraus zu einem zeitweiligen Ansteigen der Ölsumpf-Temperatur und zu einem nicht akzeptablen hohen Pegelstand kommt, wodurch bisher die Lebensdauer und die Zuverlässigkeit der Übertragungseinrichtung beeinträchtigt wurde. Es wird bei dem erfindungsgemäßen Kühl- und Schmiersystem demgegenüber eine Überhitzung des Ölsumpfes dadurch vermieden, daß durch den zweiten vom ersten hydraulischen Kreislauf unabhängigen hydraulischen Kreislauf eine eigene Kühl-Performance nur für den Ölsumpf aufgebaut wird, die unabhängig von der Kupplungsschmierung ist. Dies ermöglicht es zum einen die Sumpftemperatur zu reduzieren, z.B. vor schweren Belastungen wie einer Funktion unter Anhänger-Zugbelastung und zum anderen die Möglichkeit zur Durchführung einer geeigneten eigenen Kühl-Performance, z.B. basierend auf der Ölsumpf-Temperatur. Mit der erfindungsgemäßen Anordnung besteht der gravierende Vorteil, daß die Ölsumpftemperatur sehr ökonomisch auf eine gewünschte Temperatur eingeregelt werden kann. Es kann dadurch insgesamt eine bessere Getriebeeffizienz erzielt werden und gleichzeitig können die Verschleißmechanismen im Getriebe, die mit höherer Temperatur verschärft auftreten können, bei der hier niedriger gehaltenen Temperatur entschärft werden. Die erfindungsgemäße Anordnung ist dabei nicht nur bzgl. ihrer Funktionseigenschaften verbe ssert worden, sondern diese ist auch einfach und kostengünstig herstellbar.

Bei der bevorzugten Ausführungsform der vorliegenden Erfindung ist zur Ausbildung der voneinander unabhängigen Regelung der beiden hydraulischen Kreisläufe ein kombiniertes System mit variablen Magnetventilen, insb. VFS1 und VFS2, und Durchflußmeßventilen ausgebildet. Es wird dadurch ermöglicht, eine insbesondere elektronische Regelung der Sumpftemperatur z.B. über einen Temperatursensor im Ölsumpf als Meßgröße bereitzustellen, wobei als Stellglieder die variablen Magnetventile VFS1 und VFS2, verantwortlich für die Kühl-Performance sind und die Pumpendrehzahl als zusätzliches Stellglied bei einer Ausführung einer elektrisch angetriebenen Pumpe dienen kann.

Nach einem weiteren bevorzugten Ausgestaltungsmerkmal der vorliegenden Erfindung empfiehlt es sich, daß die zwei unabhängigen hydraulischen Kreisläufe als Hochdruckkreisläufe ausgebildet sind. Dies hat den Vorteil, daß auf die Ausbildung von Niedrigdruckkreisläufen gänzlich verzichtet werden kann.

Es empfiehlt sich nach einem weiteren Ausgestaltungsmerkmal der vorliegenden Erfindung, daß der erste hydraulische Kreislauf zur Bereitstellung der gewünschten Durchflußrate des erforderlichen Druckes und des einzubringenden Kühl- und Schmiermittels wenigstens eine Pumpe aufweist. Zweckmäßig ist dabei die Pumpe des ersten hydraulischen Kreislaufes als kontinuierlich angetriebene Pumpe ausgebildet. Über diese kontinuierlich angetriebene Pumpe wird fortlaufend Schmiermittel zum Bereitstellen einer Schmierung und Kühlung der Kupplung sowie des übrigen Übertragungssystems gefördert.

Nach einem weiteren Ausgestaltungsmerkmal der vorliegenden Erfindung kann der zur Kühlung und Schmierung dienende Teil des ersten hydraulischen Kreislaufes über ein Hauptregelventil in zwei Ausgänge geteilt ausgebildet ist, wobei ein Ausgang zur Kühlung und Schmierung der Kupplung und der andere Ausgang zur Kühlung und Schmierung der verbleibenden Elemente des Übertragungssystems vorgesehen ist.

Zweckmäßig ist es nach einem weiteren Ausgestaltungsmerkmal der vorliegenden Erfindung, daß zum Zusammenwirken des ersten hydraulischen Kreislaufes und des zweiten hydraulischen Kreislaufes wenigstens ein Verbindungselement vorgesehen ist. Es empfiehlt sich dabei, daß das Verbindungselement zum Zusammenwirken des ersten und des zweiten hydraulischen Kreislaufes ein Notfall- System umfaßt, das den ersten hydraulischen Kreislauf im Fall eines Ausfalles des zweiten hydraulischen Kreislaufes mit dem Kühler verbindet. Auf diese Weise kann im Falle eines Ausfalles des zweiten hydraulischen Kreislaufes durch die Elektronik z.B. über einen Temperatursensor dieser Ausfall sowie ggfs. auch ein anderer Fehler erfaßt werden und anschließend z.B. mit einem der beiden Magnetventile VFS1 oder VFS2 der erste hydraulische Kreislauf mit dem Kühler verbunden werden kann, um somit Kühlung und Schmierung des Gesamtsystems aufrecht zu erhalten. Es ist diese Ausbildung eines Notfallsystems für die Sicherheit des Systems von erheblicher Bedeutung. Es ist bei dieser Ausführungsform bevorzugt das Verbindungselement als Wechselventil ausgebildet. Dabei empfiehlt es sich, daß das Wechselventil durch die variablen Magnetventile VFS1 und/oder VFS2 gesteuert wird.

Nach einem weiteren bevorzugten Ausgestaltungsmerkmal der vorliegenden Erfindung erfolgt die vom ersten hydraulischen Kreislauf unabhängige Regelung der Sumpftemperatur in einem geschlossenen Regelkreis durch eine Erfassung und Rückkopplung der Sumpftemperatur selbst. Dies kann nach einem weiteren vorteilhaften Ausgestaltungsmerkmal der vorliegenden Erfindung in einfacher und funktionsgerechter Weise dadurch erfolgen, daß zur Erfassung der Sumpftemperatur wenigstens ein Ölsumpf- Temperatursensor vorgesehen ist.

Zweckmäßig ist es nach einem weiteren Ausgestaltungsmerkmal der vorliegenden Erfindung, daß zur Bestimmung der Durchflußmenge zum Kühler für die vom ersten hydraulischen Kreislauf unabhängige Regelung der Sumpftemperatur in einem geschlossenen Regelkreis ein zum Kühler führendes Flowregulierventil vorgesehen ist. Über dieses Flowregulierventil lassen sich die die Durchflußmenge betreffenden Regelgrößen für den geschlossenen Regelkreis einfach und sicher ermitteln.

Es empfiehlt sich nach einem weiteren Merkmal der vorliegenden Erfindung, daß der zweite hydraulische Kreislauf zur Bereitstellung der gewünschten Durchflußmenge an Kühlmittel zur Kühlung des Ölsumpfes und zur Steuerung des Durchflusses des Kühlmittels wenigstens eine den Durchfluß und dessen Geschwindigkeit steuernde Pumpe umfaßt. Diese Pumpe des zweiten hydraulischen Kreislaufes ist dabei bevorzugt als kontinuierlich angetriebene Pumpe ausgebildet. Es empfiehlt sich dabei, daß der Aktuator für den geschlossenen Regelkreis zur Regelung der Sumpftemperatur im Fall der kontinuierlich angetriebenen Pumpe des zweiten hydraulischen Kreislaufes durch die variablen Magnetventile VFS1 und/oder VFS2 und dem Flowregulierventil gebildet ist.

Bei einer anderen Ausführungsform der vorliegenden Erfindung ist die Pumpe des zweiten hydraulischen Kreislaufes als elektrische Pumpe ausgebildet. In diesem Fall empfiehlt es sich, daß der Aktuator für den geschlossenen Regelkreis zur Regelung der Sumpftemperatur durch die Pumpe des zweiten hydraulischen Kreislaufes, dem Flowregulierventil, und durch die variablen Magnetventile VFS1 und/oder VFS2 gebildet ist. Im Falle einer elektrisch ausgebildeten Pumpe wird also zur Kühlung des Sumpfes ein zusätzliches Stellglied in Form von der Pumpendrehzahl vorgesehen. Diese Ausbildung ist von besonderem Vorteil, da die elektrisch ausgebildete Pumpe des unabhängigen zweiten hydraulischen Kreislaufes nur dann aktiviert wird, wenn die Energiezufuhr in die Übertragungseinrichtung hoch ist und die Temperatur steigt. Dies spart Treibstoff und ermöglicht es, daß die Sumpftemperatur auf einem gewünschten Pegel arbeitet, unabhängig von dem Funktionsmodus der Übertragungseinrichtung. Dies ist besonders wichtig, z.B. während einer Funktion unter normalen Fuhrbedingungen, in den Leerlaufphasen und unter normalen Umgebungsbedingungen, wenn genügend Fahrzeugkühlung mit hoher Fahrzeuggeschwindigkeit vorliegt und die Pumpe des zweiten hydraulischen Kreislaufes zwecks Treibstoffeinsparung abgeschaltet werden kann.

Nach einem letzten Merkmal der vorliegenden Erfindung ist in einer Bypassleitung zu dem Kühler für den Fall von kalten Umgebungsbedingungen zur Schnellaufwärmung der Übertragungseinrichtung ein thermostatisches Bypassventil ausgebildet.

Die Erfindung ist in zwei Figuren bzw. in zwei Ausführungsbeispielen dargestellt. Es zeigt:
- Fig.1: eine schematische Ansicht eines erfindungsgemäßen, in ein Steuerungsgesamtsystem eines Fahrzeuges integrierten, Kühl- und Schmiersystems mit einer kontinuierlich angetriebenen Pumpe des zweiten hydraulischen Kreislaufes;
- Fig. 2: eine schematische Ansicht eines erfindungsgemäßen, in ein Steuerungssystem eines Fahrzeuges integrierten Kühl- und Schmiersystems, mit einer elektrisch angetriebenen Pumpe des zweiten hydraulischen Kühlkreislaufes.

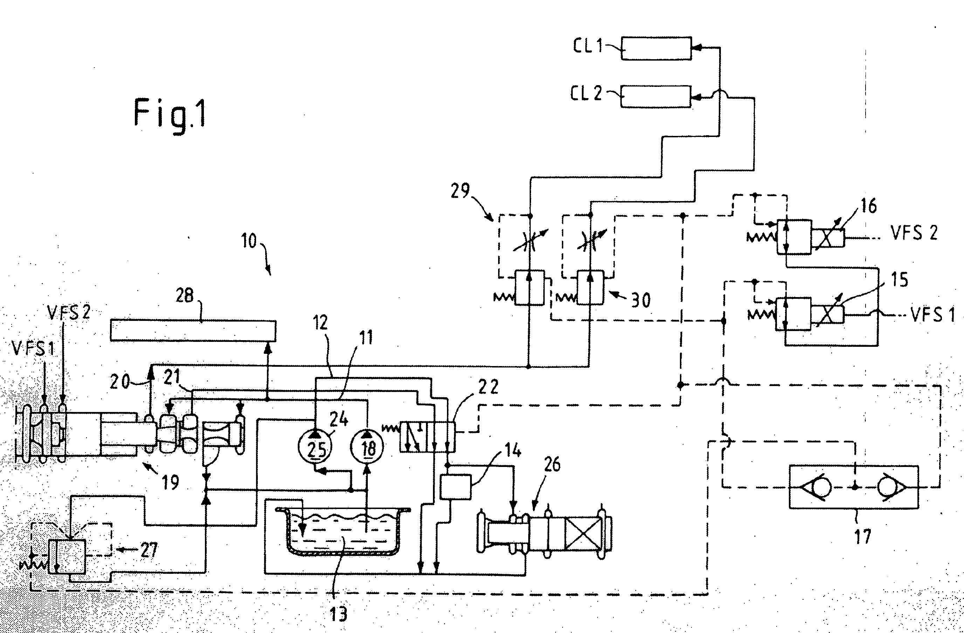

Das erfindungsgemäße Kühl- und Schmiersystem ist generell mit 10 bezeichnet. Das Kühl- und Schmiersystem 10 ist vorgesehen für eine Kupplung für ein Übertragungssystem, in diesem Falle für eine Kupplung und das Getriebe eines vorzugsweise automatisierten Doppelkupplungsgetriebes. Es ist dazu in der Fig. 1 der Zeichnung ein erfindungsgemäßes, in ein Steuerungsgesamtsystem eines Fahrzeuges integriertes, Kühl- und Schmiersystem 10 dargestellt. Das erfindungsgemäße Kühl- und Schmiersystem 10 umfaßt dabei zwei unterschiedliche unabhängige, mit 11 und 12 bezeichnete hydraulische Kreisläufe, wobei diese beiden hydraulische Kreisläufe 11,12 zur Bereitstellung von Druck und für die Kühlung und Schmierung der Kupplung und des Getriebes dienen. Es ist dabei der erste hydraulische Kreislauf 11 zur Ansteuerung der Kupplung und parallel dazu zur Schmierung und Kühlung des Getriebes und der Kupplung ausgebildet, sowie auch zur Schmierung und Kühlung des übrigen Übertragungssystems, während der zweite hydraulische Kreislauf 12 unabhängig vom ersten hydraulischen Kreislauf 11 ausgebildet ist und im wesentlichen zur Kühlung des mit 13 bezeichneten Ölsumpfes dient.

Um bei dem erfindungsgemäßen Kühl- und Schmiersystem 10 die Sumpftemperatur unabhängig von den Schmierkreisläufen regulieren zu können, ist erfindungsgemäß vorgesehen, daß der zweite hydraulische Kreislauf 12 als geschlossener Regelkreis zur vom ersten hydraulischen Kreislauf 11 unabhängigen Regelung der Sumpftemperatur in Abhängigkeit der Durchflußmenge zum Kühler 14 des Kühl- und Schmiersystems 10 ausgebildet ist. Es wird durch diese Ausbildung insbesondere eine Überhitzung des Ölsumpfes 13 dadurch vermieden, daß durch den zweiten vom ersten hydraulischen Kreislauf 11 unabhängigen hydraulischen Kreislauf 12 eine eigene Kühl- Performance nur für den Ölsumpf 13 aufgebaut wird, die unabhängig von der Kupplungskühlung ist. Dies ermöglicht es zum einen die Sumpftemperatur zu reduzieren z.B. vor schweren Belastungen wie einer Funktion unter Anhänger-Zugbelastung und zum anderen die Möglichkeit zur Durchführung einer geeigneten eigenen Kühl- Performance, z.B. basierend auf der Ölsumpftemperatur.

Zur Ausbildung der voneinander unabhängigen Regelung der beiden hydraulischen Kreisläufe 11,12 ist bei dem dargestellten Ausführungsbeispiel ein kombiniertes System mit variablen Magnetventilen, in diesem Falle gebildet durch die Magnetventile VFS1 15 und VFS2 16, Wechselventil 17, Regelventil 27, in diesem gebildet durch die Pumpe 25 des zweiten hydraulischen Kreislaufes 12, ausgebildet, es wird hierauf weiter unten nach näher eingegangen werden.

Bei dem dargestellten Ausführungsbeispiel des erfindungsgemäßen Kühl- und Schmiersystems 10 sind die beiden unabhängigen hydraulischen Kreisläufe 11 und 12 als Hochdruckkreisläufe ausgebildet. Es ist dabei der erste hydraulische Kreislauf 11 der hauptsächlich für den Druckaufbau zuständige Kreislauf, der den erforderlichen Druck für die Kupplungen liefert und der parallel dazu insbesondere zur Kühlung und Schmierung des Getriebes und der Kupplung ausgebildet ist, es sind diese Bereiche der Kupplung für das Übertragungssystem in der Fig.1 mit CL1 und CL2 bezeichnet. Es ist dabei der Bereich CL1 der Kupplung für die Gänge R, 1, 3 und 5, und der Bereich CL2 für die Gänge 2, 4 und 6 vorgesehen, dies ist in der Fig. 1 ebenfalls schematisch angedeutet dargestellt. Der erste hydraulische Kreislauf 11 weist weiterhin zur Bereitstellung der gewünschten Durchflußrate des erforderlichen Druckes und des einzubringenden Kühl- und Schmiermittels eine Pumpe 18 auf. Diese Pumpe 18 des ersten hydraulischen Kreislaufes 11 ist dabei als kontinuierlich angetriebene Pumpe 18 ausgebildet und sorgt im wesentlichen für eine fortlaufende Druckaufbau, Kühlung und Schmierung des Getriebes und der Kupplung sowie auch des übrigen Übertragungssystems.

Der zur Kühlung und Schmierung dienende Teil des ersten hydraulischen Kreislaufes 11 ist über ein Hauptregelventil 19 in zwei Ausgänge geteilt ausgebildet, wobei ein Ausgang 20 zur Kühlung und Schmierung der Kupplung und der andere Ausgang 21 zur Kühlung und Schmierung der verbleibenden Elemente des Übertragungssystems vorgesehen ist. Der Ausgang 20 des Hauptregelventiles 19 ist dabei mit den Bereichen der Kühlung und Schmierung von CL1 und CL2 der Kupplung verbunden, während der Ausgang 21 zur Kühlung und Schmierung der verbleibenden Element des Übertragungssystems, in der Fig. 1 mit "front/rear lube" bezeichnet, führt. Weiterhin im Kreislauf 20 sind jeweils zwei Durchflußregelventile 29 und 30 für die Kühlung und Schmierung von CL1 und CL2 gesteuert von VFS1 und VFS2 mit eingebunden. Die Ausgangsgröße vom Hauptregelventil 19 wird in dem dargestellten Ausführungsbeispiel den CL1/CL2-Modulatoren 28 zugeführt, die den Druckaufbau von Kupplungen CL1 und CL2 bewerkstelligen.

Zum Zusammenwirken des ersten hydraulischen Kreislaufes 11 und des zweiten hydraulischen Kreislaufes 12 ist bei dem dargestellten Ausführungsbeispiel ein mit 22 bezeichnetes Verbindungselement vorgesehen. Dieses Verbindungselement 22 befindet sich vor dem mit "front/rear lube" bezeichneten Teil der verbleibenden Elemente des Übertragungssystems. Dieses Verbindungselement 22 umfaßt zum Zusammenwirken des ersten und des zweiten hydraulischen Kreislaufes 11,12 ein Notfall-System, das den ersten hydraulischen Kreislauf 11 im Fall eines Ausfalles des zweiten hydraulischen Kreislaufes 12 mit dem Kühler 14 verbindet. Mit diesem System kann im Falle eines Ausfalles des zweiten hydraulischen Kreislaufes 12 durch die Elektronik z.B. über einen Temperatursensor dieser Ausfall sowie ggf. auch ein anderer Fehler erfaßt werden und anschließend mit einem der beiden Magnetventile VFS1 15 oder VFS2 16 der erste hydraulische Kreislauf 11 mit dem Kühler 14 verbunden werden, wobei auch der zweite Kreislauf 12 zur Kühlung und Schmierung aufrechterhalten werden kann. Es ist diese Ausbildung eines Notfallsystems für die Sicherheit des Systems von erheblicher Bedeutung. Es ist dabei in diesem Falle das Verbindungselement 22 als Wegeventil ausgebildet, wobei dieses Wegeventil durch die variablen Magnetventile VFS1 15 und/oder VFS2 16 gesteuert wird.

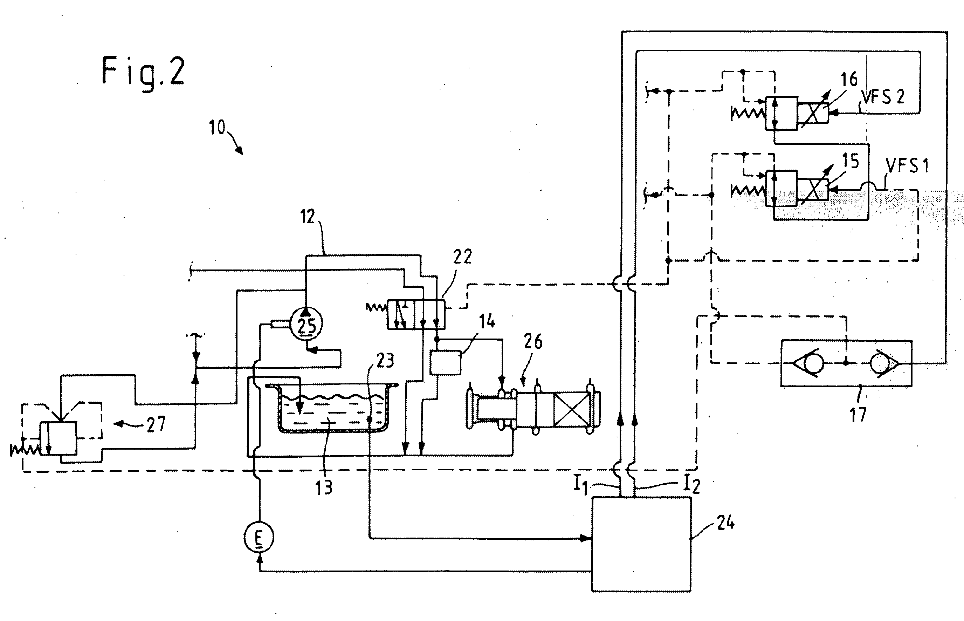

Bei dem dargestellten Ausführungsbeispiel des erfindungsgemäßen Kühl- und Schmiersystems 10 erfolgt weiterhin die vom ersten hydraulischen Kreislauf 11 unabhängige Regelung der Sumpftemperatur in einem geschlossenen Regelkreis durch eine Erfassung und Rückkopplung der Sumpftemperatur selbst. Dies erfolgt im vorliegenden Falle in der Weise, daß zur Erfassung der Sumpftemperatur wenigstens ein Ölsumpf-Temperatursensor 23 vorgesehen ist. Die von dem Temperatursensor 23 erfaßten Meßwerte werden vorliegend in einem in Fig. 2 dargestellten Mikroprozessor weiterverarbeitet, das Stellglied zur Einstellung der Sumpftemperatur erfolgt dabei über ein mit 27 bezeichnetes weiteres DruckRegelventil, das entsprechend die Durchflußrate durch den Kühler einstellt.

Das erfindungsgemäße Kühl- und Schmiersystem 10 ist im weiteren derart ausgebildet, daß zur Bestimmung der Durchflußmenge zum Kühler 14 für die vom ersten hydraulischen Kreislauf 11 unabhängige Regelung der Sumpftemperatur in einem geschlossenen Regelkreis ein parallel zum Kühler 14 führendes Druckregulierventil 27 vorgesehen ist, über das sich die die Durchflußmenge betreffenden Regelgrößen für den geschlossenen Regelkreis einfach und sicher ermitteln lassen. Es umfaßt dazu der zweite hydraulische Kreislauf 12 zur Bereitstellung der gewünschten Durchflußmenge an Kühlmittel zur Kühlung des Ölsumpfes 13 und zur Steuerung des Durchflusses des Kühlmittels eine den Durchfluß und dessen Geschwindigkeit steuernde Pumpe 25. Diese Pumpe 25 des zweiten hydraulischen Kreislaufes 12 ist dabei als kontinuierlich angetriebene Pumpe 25 ausgebildet. Der Aktuator für den geschlossenen Regelkreis zur Regelung der Sumpftemperatur ist in diesem Fall der kontinuierlich angetriebenen Pumpe 25 des zweiten hydraulischen Kreislaufes 12 durch die variablen Magnetventile VFS1 15 und/oder VFS2 16, dem Wechselventil 17, und dem Druckregulierventil 27 gebildet.

Bei einer anderen Ausführungsform der vorliegenden Erfindung kann die Pumpe 25 des zweiten hydraulischen Kreislaufes 12 als elektrisch angetriebene Pumpe 25 wie in Fig. 2 ausgebildet sein. In diesem Fall ist der Aktuator für den geschlossenen Regelkreis zur Regelung der Sumpftemperatur durch die Pumpe 25 des zweiten hydraulischen Kreislaufes 12 und durch die variablen Magnetventile VFS1 15 und/oder VFS2 16 im Zusammenspiel mit dem Druckregulierventil 27 gebildet. In diesem Falle wird also zur Kühlung des Sumpfes ein zusätzliches Stellglied in Form der Pumpendrehzahl und vom Mikroprozessor 24 geregelt, vorgesehen. Diese Ausbildung ist von besonderem Vorteil, da die elektrisch ausgebildete Pumpe 25 des unabhängigen zweiten hydraulischen Kreislaufes 12 nur dann aktiviert wird, wenn die Energiezufuhr in die Übertragungseinrichtung hoch ist und die Temperatur steigt. Dies spart Treibstoff und ermöglicht es, daß die Sumpftemperatur auf einem gewünschten Pegel arbeitet, unabhängig von dem Funktionsmodus der Übertragungseinrichtung. Dies ist besonders wichtig z.B. während einer Funktion unter Anhänger-Zugbelastung in den Leerlaufphasen unter heißen Umgebungsbedingungen, wenn nur eine geringe Fahrzeugkühlung mit wenig oder gar keiner Fahrzeuggeschwi ndigkeit vorliegt.

Bei dem erfindungsgemäßen Kühl- und Schmiersystem 10 ist außerdem in einer Bypassleitung zu dem Kühler 14 für den Fall von kalten Umgebungsbedingungen zur Schnellaufwärmung der Übertragungseinrichtung ein thermostatisches Bypassventil 26 ausgebildet.

Mit dem erfindungsgemäßen Kühl- und Schmiersystem 10 wird ein Komplettausfall der Schmierung und/oder ein Komplettausfall der Kühlung ausgeschlossen, und zwar insbesondere für ein Doppelkupplungsgetriebe. Wenn bei diesem System die erste Pumpe 18 ausfallen sollte, ist kein Druckaufbau vorhanden und das Fahrzeug bleibt liegen, es wird dieses aber z.B. beim Abschleppen über die zweite Pumpe 25 geschmiert. Wenn diese zweite Pumpe 25 ausfällt oder ein anderer Fehler wie z.B. eine Leckage in der Dichtung od. dgl. auftritt, dann wird dies durch die Elektronik über den Temperatursensor 23 4 erfaßt und dann mit einem der beiden VFS 's 15 oder 16 die Pumpe 18 des ersten hydraulischen Kreislaufes in die Kühlung und auch in die Schmierung geleitet.

Mit dem erfindungsgemäßen Kühl- und Schmiersystem 10 wird mit einfachen Mitteln die Möglichkeit geschaffen, ein Kühl- und Schmiersystem 10 hinsichtlich seiner Lebensdauer und seiner Zuverlässigkeit dadurch erheblich zu verbessern, daß die Sumpftemperatur dieses Kühl- und Schmiersystems 10 unabhängig von den Schmierkreisläufen reguliert wird. Durch die unabhängige Regelung der Sumpftemperatur des Kühl- und Schmiersystems 10 wird insbesondere vermieden, daß es wie bei vielen bekannten Systemen durch den Transport der Wärme bzw. Hitze aus dem Ölsumpf heraus zu einem zeitweiligen Ansteigen der Ölsumpftemperatur zu einem nicht akzeptablen hohen Pegelstand kommt, wodurch bisher die Lebensdauer und die Zuverlässigkeit der Übertragungseinrichtung beeinträchtigt wurde. Es wird bei dem erfindungsgemäßen Kühl- und Schmiersystem 10 demgegenüber eine Überhitzung des Ölsumpfes dadurch vermieden, daß durch den zweiten vom ersten hydraulischen Kreislauf 11 unabhängigen hydraulischen Kreislauf 12 eine eigene Kühl-Performance nur für den Ölsumpf aufgebaut wird, die unabhängig von der Kupplungskühlung ist. Dies ermöglicht es zum einen die Sumpftemperatur zu reduzieren z.B. vor schweren Belastungen wie einer Funktion unter Anhänger-Zugbelastung und zum anderen die Möglichkeit zur Durchführung einer geeigneten eigenen Kühl-Performance, z.B. basierend auf der Ölsumpftemperatur. Durch die vom ersten hydraulischen Kreislauf 11 unabhängige Regelung ist es außerdem möglich, die Kühlung abzuschalten, falls diese nicht erforderlich ist. Des weiteren besteht bei Antrieb beider Pumpen 18,25 mit einer Maschine die Möglichkeit, über die VFS 's 15 und/oder 16 den Schmierstrom variabel einzustellen.

Mit der erfindungsgemäßen Anordnung besteht der gravierende Vorteil, daß die Ölsumpftemperatur sehr ökonomisch auf eine gewünschte Temperatur eingeregelt werden kann. Es kann dadurch insgesamt eine bessere Getriebeeffizienz erzielt werden und gleichzeitig können die Verschleißmechanismen im Getriebe, die mit höherer Temperatur verschärft auftreten können, bei der hier niedriger gehaltenen Temperatur entschärft werden.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann das erfindungsgemäße Kühl- und Schmiersystem, insbesondere deren hydraulische Kreisläufe 11 und 12 von den dargestellten Ausführungsformen abweichende Ausführungen aufweisen, weiterhin denkbar sind unterschiedlichste Kombinationen mit Schalt- und Regelelementen sowie auch eine Anwendung bei anderen Arten als Doppelkupplungsgetrieben.

## Patentansprüche

1. Kühl- und Schmiersystem (10) für eine Kupplung für ein Übertragungssystem, insb. für eine Kupplung und das Getriebe eines vorzugsweise automatisierten Doppelkupplungsgetriebes, das zur Bereitstellung von Druck und für die Kühlung und Schmierung der Kupplung und des Getriebes zwei unabhängige hydraulische Kreisläufe (11,12) umfaßt, wobei der erste hydraulische Kreislauf (11) zur Ansteuerung der Kupplung und parallel dazu zur Schmierung und Kühlung des Getriebes und der Kupplung ausgebildet ist, sowie auch zur Schmierung und Kühlung des übrigen Übertragungssystems, und wobei der zweite hydraulische Kreislauf (12) unabhängig vom ersten hydraulischen Kreislauf (11) ausgebildet ist und im wesentlichen zur Kühlung des Ölsumpfes (13) dient,
**dadurch gekennzeichnet, daß**
der zweite hydraulische Kreislauf (12) als geschlossener Regelkreis zur vom ersten hydraulischen Kreislauf (11) unabhängigen Regelung der Sumpftemperatur in Abhängigkeit der Durchflußmenge zum Kühler (14) des Kühl- und Schmiersystems (10) ausgebildet ist.

2. Kühl- und Schmiersystem nach Anspruch 1,
**dadurch gekennzeichnet, daß**
zur Ausbildung der voneinander unabhängigen Regelung der beiden hydraulischen Kreisläufe (11,12) ein kombiniertes System mit variablen Magnetventilen, insb. VFS1 (15) und VFS2 (16), Wechselventil 17, Druckregulierventil 27 und Hauptleitungsdruckregulierventil 19 ausgebildet ist.

3. Kühl- und Schmiersystem nach Anspruch 1 oder 2,
**dadurch gekennzeichnet, daß**
die zwei unabhängigen hydraulischen Kreisläufe (11,12) als Hochdruckkreisläufe ausgebildet sind.

4. Kühl- und Schmiersystem nach einem der Ansprüche 1 bis 3,
**dadurch gekennzeichnet, daß**
der erste hydraulische Kreislauf (11) zur Bereitstellung der gewünschten Durchflußrate des erforderlichen Druckes und des einzubringenden Kühl- und Schmiermittels wenigstens eine Pumpe (18) aufweist.

5. Kühl- und Schmiersystem nach Anspruch 4,
**dadurch gekennzeichnet, daß**
die Pumpe (18) des ersten hydraulischen Kreislaufes (11) als kontinuierlich angetriebene Pumpe (18) ausgebildet ist.

6. Kühl- und Schmiersystem nach Anspruch 4 oder 5,
**dadurch gekennzeichnet, daß**
der zur Kühlung und Schmierung dienende Teil des ersten hydraulischen Kreislaufes (11) über ein Hauptregelventil (19) in zwei Ausgänge geteilt ausgebildet ist, wobei ein Ausgang (20) zur Kühlung und Schmierung der Kupplung und der andere Ausgang (21) zur Kühlung und Schmierung der verbleibenden Elemente des Übertragungssystems vorgesehen ist.

7. Kühl- und Schmiersystem nach einem der Ansprüche 1 bis 6,
**dadurch gekennzeichnet, daß**
zum Zusammenwirken des ersten hydraulischen Kreislaufes (11) und des zweiten hydraulischen Kreislaufes (12) wenigstens ein Verbindungselement (22) vorgesehen ist.

8. Kühl- und Schmiersystem nach Anspruch 7,
**dadurch gekennzeichnet, daß**
das Verbindungselement (22) zum Zusammenwirken des ersten und des zweiten hydraulischen Kreislaufes (11,12) ein Notfall- System umfaßt, das den ersten hydraulischen Kreislauf (11) im Fall eines Ausfalles des zweiten hydraulischen Kreislaufes (12) mit dem Kühler (14) verbindet.

9. Kühl- und Schmiersystem nach Anspruch 8,
**dadurch gekennzeichnet, daß**
das Verbindungselement (22) als Wegeventil ausgebildet ist.

10. Kühl- und Schmiersystem nach Anspruch 9,
**dadurch gekennzeichnet, daß**
das Wechselventil durch variable Magnetventile VFS1 (15) und/oder VFS2 (16) gesteuert wird.

11. Kühl- und Schmiersystem nach einem der Ansprüche 1 bis 10,
**dadurch gekennzeichnet, daß**
die vom ersten hydraulischen Kreislauf (11) unabhängige Regelung der Sumpftemperatur in einem geschlossenen Regelkreis durch eine Erfassung und Rückkopplung der Sumpftemperatur selbst erfolgt.

12. Kühl- und Schmiersystem nach Anspruch 11,
**dadurch gekennzeichnet, daß**
zur Erfassung der Sumpftemperatur wenigstens ein Ölsumpf Temperatursensor (23) vorgesehen ist.

13. Kühl- und Schmiersystem nach einem der Ansprüche 1 bis 12,
**dadurch gekennzeichnet, daß**
zur Bestimmung der Durchflußmenge zum Kühler (14) für die vom ersten hydraulischen Kreislauf (11) unabhängige Regelung der Sumpftemperatur in einem geschlossenen Regelkreis ein zum Kühler (14) parallel führendes Druckregulierventil (27) vorgesehen ist.

14. Kühl- und Schmiersystem nach einem der Ansprüche 1 bis 13,
**dadurch gekennzeichnet, daß**
der zweite hydraulische Kreislauf (12) zur Bereitstellung der gewünschten Durchflußmenge an Kühlmittel zur Kühlung des Olsumpfes (13) und zur Steuerung des Durchflusses des Kühlmittels wenigstens eine den Durchfluß und dessen Geschwindigkeit steuernde Pumpe (25) umfaßt.

15. Kühl- und Schmiersystem nach Anspruch 14,
**dadurch gekennzeichnet, daß**
die Pumpe (25) des zweiten hydraulischen Kreislaufes (12) als kontinuierlich angetriebene Pumpe (25) ausgebildet ist.

16. Kühl- und Schmiersystem nach Anspruch 15,
**dadurch gekennzeichnet, daß**
der Aktuator für den geschlossenen Regelkreis zur Regelung der Sumpftemperatur im Fall der kontinuierlich angetriebenen Pumpe (25) des zweiten hydraulischen Kreislaufes (12) durch die variablen Magnetventile VFS1 (15) und/oder VFS2 (16) gebildet ist.

17. Kühl- und Schmiersystem nach einem der Ansprüche 14 bis 16,
**dadurch gekennzeichnet, daß**
die Pumpe (25) des zweiten hydraulischen Kreislaufes (12) als elektrische Pumpe (25) ausgebildet ist.

18. Kühl- und Schmiersystem nach einem der Ansprüche 1 bis 17,
**dadurch gekennzeichnet, daß**
der Aktuator für den geschlossenen Regelkreis zur Regelung der Sumpftemperatur durch die Pumpe (25) des zweiten hydraulischen Kreislaufes (12) und durch die variablen Magnetventile VFS1 (15) und/oder VFS2 (16) gebildet ist.

19. Kühl- und Schmiersystem nach einem der Ansprüche 1 bis 18,
**dadurch gekennzeichnet, daß**
in einer Bypassleitung zu dem Kühler (14) für den Fall von kalten Umgebungsbedingungen zur Schnellaufwärmung der Übertragungseinrichtung ein thermostatisches Bypassventil (26) ausgebildet ist.

## Claims

1. Cooling and lubrication system (10) for a clutch for a transmission system, in particular for a clutch and the transmission of a preferably automatic double clutch transmission, which comprises two independent hydraulic circuits (11, 12) for providing pressure and for cooling and lubricating the clutch and the transmission, the first hydraulic circuit (11) being designed to actuate the clutch and, in parallel with this, to lubricate and cool the transmission and the clutch, and also to lubricate and cool the rest of the transmission system, the second hydraulic circuit (12) being made independent of the first hydraulic circuit (11) and serving essentially to cool the oil sump (13), **characterized in that** the second hydraulic circuit (12) is embodied as a closed closed-loop control circuit for performing closed-loop control of the sump temperature independently of the first hydraulic circuit (11) and as a function of the throughflow rate to the radiator (14) of the cooling and lubrication system (10).

2. Cooling and lubrication system according to Claim 1, **characterized in that** in order to form the means of performing closed-loop control of the two hydraulic circuits (11, 12) independently of one another, a combined system is formed with variable solenoid valves, in particular VFS1 (15) and VFS2 (16), shuttle valve 17, pressure-regulating valve 27 and main line pressure-regulating valve 19.

3. Cooling and lubrication system according to Claim 1 or 2, **characterized in that** the two independent hydraulic circuits (11, 12) are embodied as highpressure circuits.

4. Cooling and lubrication system according to one of Claims 1 to 3, **characterized in that** the first hydraulic circuit (11) for providing the desired throughflow rate of the necessary pressure and of the cooling and lubrication means to be introduced has at least one pump (18).

5. Cooling and lubrication system according to Claim 4, **characterized in that** the pump (18) of the first hydraulic circuit (11) is embodied as a continuously driven pump (18) .

6. Cooling and lubrication system according to Claim 4 or 5, **characterized in that** the part of the first hydraulic circuit (11) which has the purpose of performing cooling and lubrication is divided into two outputs by means of a main regulating valve (19), one output (20) being provided for cooling and lubricating the clutch, and the other output (21) being provided for cooling and lubricating the remaining elements of the transmission system.

7. Cooling and lubrication system according to one of Claims 1 to 6, **characterized in that** at least one connecting element (22) is provided for interaction between the first hydraulic circuit (11) and the second hydraulic circuit (12).

8. Cooling and lubrication system according to Claim 7, **characterized in that** the connecting element (22) for permitting interaction between the first and second hydraulic circuits (11, 12) comprises an emergency system which connects the first hydraulic circuit (11) to the radiator (14) if the second hydraulic circuit (12) fails.

9. Cooling and lubrication system according to Claim 8, **characterized in that** the connecting element (22) is embodied as a directional valve.

10. Cooling and lubrication system according to Claim 9, **characterized in that** the shuttle valve is controlled by variable solenoid valves VFS1 (15) and/or VFS2 (16).

11. Cooling and lubrication system according to one of Claims 1 to 10, **characterized in that** the closed-loop control of the sump temperature which takes place independently of the first hydraulic circuit (11) takes place in a closed closed-loop control circuit by sensing and feeding back the sump temperature itself.

12. Cooling and lubrication system according to Claim 11, **characterized in that** at least one oil sump temperature sensor (23) is provided for sensing the sump temperature.

13. Cooling and lubrication system according to one of Claims 1 to 12, **characterized in that** a pressure-regulating valve (27) which is connected parallel to the radiator (14) is provided for determining the throughflow rate to the radiator (14) for the closed-loop control of the sump temperature which takes place in a closed closed-loop control circuit, independently of the first hydraulic circuit (11).

14. Cooling and lubrication system according to one of Claims 1 to 13, **characterized in that** the second hydraulic circuit (12) comprises at least one pump (25) which controls the throughflow and its speed in order to provide the desired throughflow rate of coolant for cooling the oil sump (13) and in order to control the throughflow of coolant.

15. Cooling and lubrication system according to Claim 14, **characterized in that** the pump (25) of the second hydraulic circuit (12) is embodied as a continuously driven pump (25).

16. Cooling and lubrication system according to Claim 15, **characterized in that** the actuator for the closed closed-loop control circuit is designed to perform closed-loop control of the sump temperature if the pump (25) of the second hydraulic circuit (12) is being driven continuously by the variable solenoid valves VFS1 (15) and/or VFS2 (16).

17. Cooling and lubrication system according to one of Claims 14 to 16, **characterized in that** the pump (25) of the second hydraulic circuit (12) is embodied as an electric pump (25).

18. Cooling and lubrication system according to one of Claims 1 to 17, **characterized in that** the actuator for the closed closed-loop control circuit for performing closed-loop control of the sump temperature is formed by the pump (25) of the second hydraulic circuit (12) and by the variable solenoid valves VFS1 (15) and/or VFS2 (16).

19. Cooling and lubrication system according to one of Claims 1 to 18, **characterized in that** a thermostatic bypass valve (26) is embodied in a bypass line bypassing the radiator (14) in order to heat up the transmission device quickly in the event of cold ambient conditions.

## Revendications

1. Système de refroidissement et de lubrification (10) pour un dispositif d'accouplement pour un système de transmission, notamment pour un dispositif d'accouplement et la boîte de vitesses d'une boîte de vitesse à double dispositif d'accouplement de préférence automatisée, lequel comprend deux circuits hydrauliques (11, 12) indépendants pour fournir la pression ainsi que pour refroidir et lubrifier le dispositif d'accouplement et la boîte de vitesses, le premier circuit hydraulique (11) étant configuré pour commander le dispositif d'accouplement et, parallèlement à cela, pour lubrifier et refroidir la boîte de vitesses et le dispositif d'accouplement, et aussi pour lubrifier et refroidir le reste du système de transmission, et le deuxième circuit hydraulique (12) étant configuré indépendamment du premier circuit hydraulique (11) et servant pour l'essentiel à refroidir le carter à huile (13), **caractérisé en ce que** le deuxième circuit hydraulique (12) est réalisé sous la forme d'un circuit de régulation fermé destiné à la régulation indépendamment du premier circuit hydraulique (11) de la température du carter en fonction du débit volumique vers le radiateur (14) du système de refroidissement et de lubrification (10).

2. Système de refroidissement et de lubrification selon la revendication 1, **caractérisé en ce qu'**un système combiné avec électrovannes variables, notamment VFS1 (15) et VFS2 (16), sélecteur de circuit 17, régulateur de pression 27 et régulateur de pression de conduite principale 19 est configuré pour réaliser la régulation des deux circuits hydrauliques (11, 12) indépendamment l'un de l'autre.

3. Système de refroidissement et de lubrification selon la revendication 1 ou 2, **caractérisé en ce que** les deux circuits hydrauliques indépendants (11, 12) sont réalisés sous la forme de circuits à haute pression.

4. Système de refroidissement et de lubrification selon l'une des revendications 1 à 3, **caractérisé en ce que** le premier circuit hydraulique (11) présente au moins une pompe (18) pour fournir le débit souhaité, la pression nécessaire et le liquide de refroidissement et de lubrification à amener.

5. Système de refroidissement et de lubrification selon la revendication 4, **caractérisé en ce que** la pompe (18) du premier circuit hydraulique (11) est réalisée sous la forme d'une pompe (18) à entraînement continu.

6. Système de refroidissement et de lubrification selon la revendication 4 ou 5, **caractérisé en ce que** la partie du premier circuit hydraulique (11) servant au refroidissement et à la lubrification est configurée divisée en deux sorties par une vanne de régulateur principale (19), une sortie (20) étant prévue pour refroidir et lubrifier le dispositif d'accouplement et l'autre sortie (21) pour refroidir et lubrifier les éléments restants du système de transmission.

7. Système de refroidissement et de lubrification selon l'une des revendications 1 à 6, **caractérisé en ce qu'**au moins un élément de liaison (22) est prévu pour l'interaction du premier circuit hydraulique (11) et du deuxième circuit hydraulique (12).

8. Système de refroidissement et de lubrification selon la revendication 7, **caractérisé en ce que** l'élément de liaison (22) destiné à l'interaction du premier circuit hydraulique et du deuxième circuit hydraulique (11, 12) comprend un système d'urgence qui, en cas de panne du deuxième circuit hydraulique (12), relie le premier circuit hydraulique (11) avec le radiateur (14).

9. Système de refroidissement et de lubrification selon la revendication 8, **caractérisé en ce que** l'élément de liaison (22) est réalisé sous la forme d'un distributeur.

10. Système de refroidissement et de lubrification selon la revendication 9, **caractérisé en ce que** le distributeur est commandé par des électrovannes variables VFS1 (15) et/ou VFS2 (16).

11. Système de refroidissement et de lubrification selon l'une des revendications 1 à 10, **caractérisé en ce que** la régulation de la température du carter indépendante du premier circuit hydraulique (11) s'effectue dans un circuit de régulation fermé par une acquisition et une contre-réaction de la température du carter.

12. Système de refroidissement et de lubrification selon la revendication 11, **caractérisé en ce qu'**au moins un capteur de température de carter d'huile (23) est prévu pour acquérir la température du carter.

13. Système de refroidissement et de lubrification selon l'une des revendications 1 à 12, **caractérisé en ce que** pour déterminer le débit volumique vers le radiateur (14) pour la régulation de la température du carter indépendante du premier circuit hydraulique (11) dans un circuit de régulation fermé, il est prévu un régulateur de pression (27) qui mène parallèlement vers le radiateur (14).

14. Système de refroidissement et de lubrification selon l'une des revendications 1 à 13, **caractérisé en ce que** le deuxième circuit hydraulique (12) comprend au moins une pompe (25) qui commande le débit et la vitesse d'écoulement en vue de délivrer le débit volumique souhaité de liquide de refroidissement pour refroidir le carter à huile (13) et pour commander le débit du liquide de refroidissement.

15. Système de refroidissement et de lubrification selon la revendication 14, **caractérisé en ce que** la pompe (25) du deuxième circuit hydraulique (12) est réalisée sous la forme d'une pompe (25) à entraînement continu.

16. Système de refroidissement et de lubrification selon la revendication 15, **caractérisé en ce que** l'actionneur du circuit de régulation fermé destiné à réguler la température du carter, dans le cas de la pompe (25) à entraînement continu du deuxième circuit hydraulique (12), est formé par les électrovannes variables VFS1 (15) et/ou VFS2 (16).

17. Système de refroidissement et de lubrification selon l'une des revendications 14 à 16, **caractérisé en ce que** la pompe (25) du deuxième circuit hydraulique (12) est réalisée sous la forme d'une pompe électrique (25).

18. Système de refroidissement et de lubrification selon l'une des revendications 1 à 17, **caractérisé en ce que** l'actionneur du circuit de régulation fermé destiné à réguler la température du carter est formé par la pompe (25) du deuxième circuit hydraulique (12) et par les électrovannes variables VFS1 (15) et/ou VFS2 (16) .

19. Système de refroidissement et de lubrification selon l'une des revendications 1 à 18, **caractérisé en ce qu'**une vanne de bipasse thermostatique (26) est formée dans une conduite de bipasse vers le radiateur (14) pour le cas de conditions ambiantes froides en vue d'un réchauffage rapide du dispositif de transmission.
